# EUROPEAN PATENT APPLICATION

(11) **EP 1 686 538 A2**
(43) Date of publication of application: **02.08.2006**
(21) Application number: 06001528.6
(22) Date of filing: 25.01.2006
(51) Int. Cl.: G06T 7/00, G06T 17/50

(54) **Vehicle position recognizing device and vehicle position recognizing method**

(30) Priority: 28.01.2005 JP 2005021338
(71) Applicant: AISIN AW CO., LTD., Anjo, Aichi 444-1192 (JP); Toyota Jidosha Kabushiki Kaisha, Toyota-shi, Aichi-ken, 471-8571 (JP)
(72) Inventor: Miyajima, Takayuki, Aichi 444-8564 (JP); Nakamura, Masaki, Aichi 444-8564 (JP); Nakamura, Motohiro, Toyota-shi Aichi-ken 471-8571 (JP)
(74) Representative: Vossius & Partner

(57) **Abstract**

A vehicle position recognition apparatus includes an image information capturing unit for capturing image information for at least the surface of a road picked up by an imaging device mounted on the vehicle; a feature-of-road information acquiring unit for acquiring information identifying ground objects around the imaged position from stored map information; an image information recognizing unit for recognition of images corresponding to the ground objects included in the image information; and a vehicle position pinpointing unit for pinpointing the position of the vehicle transverse of the road based on the acquired feature-of-road information and the position of the image of the ground object in the image formation which has been recognized by the image information recognizing unit.

## Description

The disclosure of Japanese Patent Application No. 2005-021338 filed on January 28, 2005, including the specification, drawings and abstract thereof, is incorporated herein by reference in its entirety.

The present invention relates to a vehicle position recognition apparatus and to a vehicle position recognizing method for recognizing the image of a predetermined object in the image information obtained in real time, and for pinpointing the position of the vehicle in the width-of-road direction.

In recent years navigation devices have employed signals from the GPS (Global positioning system) to pinpoint the position of a moving vehicle. However, the precision of pinpointing the position of a vehicle using the GPS has a margin of error on the order of tens of meters, so that it has been difficult to pinpoint position with greater precision. Accordingly, various techniques have been proposed to compensate for this lack of precision of the GPS in pinpointing a position.

For example, JP-A-5-23298 (pp. 6 through 8, Figs. 1 through 3) discloses a technique wherein a determination is made regarding whether or not the road on which a vehicle is traveling is a limited access road, e.g. expressway, by recognition of lane lines based on their luminescence in an image (image information) picked up by an imaging device mounted on the vehicle.

In the method disclosed in JP-A-5-23298, a portion, with luminescence within a window within an picked-up image, which exceeds a certain reference dimension is recognized as a lane line, or a portion surrounded with edges obtained by subjecting the picked-up image to deferential processing is recognized as the image of a lane line. The data for lane lines thus recognized is output to a determination unit as extraction-of-feature data such as the lengths thereof, the lengths of discontinuities (breaks or blank spaces) in the lane lines, the repetition (pitch) thereof, and so forth. Subsequently, the determination unit executes a routine for determining whether or not the road on which the vehicle is traveling is a limited access road, e.g. expressway, based on reference to lane lines unique to such roads.

With the above-described apparatus, for example, in a case wherein an expressway and a road without limited access are adjacent, the two adjacent roads can be distinguished to determine on which one the vehicle is traveling, thereby avoiding error in pinpointing a position using the GPS, and preventing an incorrect identification of the road on which the vehicle is traveling. Accordingly, speed control and the like of the vehicle can be executed in a manner appropriate for the type of road on which the vehicle is traveling.

However, with the system of the related art discussed above, while a determination can be made as to whether or not the road on which the vehicle is traveling is an expressway, the position of the vehicle on the road being traveled, for example, when the vehicle is traveling on a road having multiple lanes in the direction of traffic, is impossible to pinpoint in the transverse dimension (width) of the road. Thus, identification of the lane traveled by the vehicle is unreliable.

Accordingly, it is an object of the present invention to provide a vehicle position recognition apparatus and a vehicle position recognition method which enable the position of the vehicle on the road being traveled to be more accurately pinpointed by using map information, vehicle information, and the like, in addition to the image information picked up by an imaging device mounted on the vehicle.

To achieve the foregoing object, the present invention provides a vehicle position recognition apparatus including: image information capturing means for capturing image information for an imaged area including at least the surface of a road, picked up by an imaging device mounted on the vehicle; feature-of-road information acquiring means for acquiring feature-of-road information relating to a ground object within the imaged area from map information; image information recognizing means for image recognition processing of the image information to recognize an image of the ground object included in the image information; and vehicle position (location) pinpointing means for pinpointing the traverse position (location) of the vehicle, e.g. lane, based on the acquired feature-of-road information and on the position of the recognized ground object within the captured image information.

Accordingly, by employing feature-of-road information, relating to ground objects within the imaged area, from map information, in addition to the image information picked up by the imaging device mounted on the vehicle, the position of the ground objects recognized by the image information recognizing means can be compared with the feature-of-road information, whereby the tranverse position of the vehicle, i.e. position relative to the widthwise dimension of the road being traveled, can be pinpointed.

The vehicle position pinpointing means may be configured so as to pinpoint the transverse position of the vehicle by comparing (1) the position, within in the image information, of the images of one or more objects which have been recognized by the image information recognizing means with (2) the position(s) of the one or more objects within the feature-of-road information.

Thus, the transverse position, e.g. lane, of the vehicle can be pinpointed with high precision by comparing (1) the position in the image information for the image of a specific object currently acquired with (2) the position of the specific object which is included in the stored feature-of-road information.

Alternatively, the image information recognizing means may be configured so as to extract image candidates for the object to be recognized from the image information, to compare the extracted candidates with the feature-of-road information, and to recognize the image candidate having the highest degree of agreement with (conformance to) the feature-of-road information, as the image of the object to be recognized.

Thus, the image candidate best conforming to the feature-of-road information acquired from map information is recognized as the image of the object to be recognized ("ground object"), and accordingly, even if the object to be recognized has a pictorial feature which can be readily recognized is included in the image information, the recognition rate for that object can be improved, and consequently, the position of the vehicle widthwise of the road can be pinpointed with high precision.

According to a second aspect, the vehicle position recognition apparatus of the present invention includes: image information capturing means for capturing image information for an imaged area including at least the surface of a road picked up by an imaging device mounted on a vehicle; feature-of-road information acquiring means for acquiring feature-of-road information relating to a ground object within the imaged area from map information as information for each of multiple different positions widthwise of the road; image information recognizing means for image recognition processing of the image information to recognize the image of the ground object included in the image information; and vehicle position pinpointing means for pinpointing the transverse position of the vehicle on the basis of the feature-of-road information for the one position having the highest consistency obtained by comparing the acquired feature-of-road information for each of the multiple different positions with the position in the image information of the image of the object which has been recognized by the image information recognizing means, as the transverse position of the vehicle.

Accordingly, by determining the level of consistency between the feature-of-road information for each of the multiple different positions and the results of recognition of the image information recognizing means the position of the vehicle transverse of the road can be pinpointed, and consequently, the burden on the apparatus of computation for pinpointing the transverse position of the vehicle can be reduced.

In other embodiments the vehicle position recognition apparatus may further include vehicle position estimating means for estimating the transverse position of the vehicle based on the information from one or both of vehicle information acquiring means for acquiring information from the vehicle relating to the current route of the vehicle, and previous route acquiring means for acquiring information relating to routes previously driven by the vehicle, wherein the vehicle position pinpointing means pinpoints the position of the vehicle transverse of the road using the results estimated by the vehicle position estimating means. The vehicle position pinpointing means may determine the order of comparison of the feature-of-road information for each position across the width of the road (transverse position), based on the results of estimation by the vehicle position estimating means.

Thus, based on the estimated results by the vehicle position estimating means, based on the current (real time) data for the vehicle, the history of driving routes, etc, the results of recognition the image information by the recognizing means are first compared with the feature-of-road information on the basis of the position in the width direction of a road having high consistency, so that the speed of for processing computation pinpointing the transverse position of the vehicle can be improved, and also the burden imposed on the device in computation can be further reduced.

Thus, the results of estimation by the vehicle position estimating means based on the current (real time) data for the vehicle, the history of, driving routes, etc. is added to the information for pinpointing the position of the transverse of the road vehicle, for higher precision.

Where the feature-of-road information includes the position information, and at least one of shape information and color information relating to the ground object(s) to be detected, the feature-of-road information can be readily compared with the position in the image which is recognized by the image information recognizing means.

The vehicle position pinpointing means may also be configured so as to pinpoint the position of the vehicle along the length of the road based on the acquired feature-of-road information, and on the position in the image information of the image of the ground object which has been recognized by the image information recognizing means.

Also, the feature-of-road information acquiring means may acquire, from map information in a map information database within a navigation device, feature-of-road information for an area within the vicinity of the position acquired by position information acquiring means (in the navigation apparatus), while acquiring the image information from the imaging device.

Thus, feature-of-road information can be readily acquired using a function of a navigation device. Accordingly, the vehicle position recognition apparatus eliminates the need for and cost of providing a map information database including feature-of-road information, and a dedicated device for recognizing the imaged position of image information.

According to a third aspect, the present invention provides a vehicle position recognition apparatus which includes: image information capturing means for capturing image information for at least the road surface picked up by an imaging device mounted on the vehicle; image information recognition means for image recognition processing of the image information to recognize a predetermined objects ("ground objects") in the image information; vehicle position estimating means for estimating the position of the vehicle transverse of the road, based on the information from one or both of vehicle information acquiring means for acquiring information, relating to the travel route, from the vehicle, and previous-route acquiring means for acquiring information relating driving routes previously traveled by the vehicle; and vehicle position pinpointing means for pinpointing the position of the vehicle transverse of the road based on the position of the predetermined object(s) (ground objects) in the image information which has been recognized by the image information recognizing means, and the results of estimation by the vehicle position estimating means.

Accordingly, by employing the results of estimation by the vehicle position estimating means, based on the current (real time) data, history of driving routes, etc., in addition to the image information picked up by the imaging device mounted on the vehicle, the position of the vehicle transverse of the road being traveled (transverse position) can be pinpointed using both the position (location) in the image information of the image of the predetermined object which has been recognized by the image information recognizing means, and the results of estimation by the vehicle position estimating means.

The predetermined object(s) (ground object(s)) may include, for example, painted markings, e.g. lane lines, provided on the road surface. Also, the image information capturing means may be configured so as to repeadedly capture the image information picked up with the imaging device mounted on the vehicle at a predetermined time interval.

Thus, a routine for pinpointing the position in the position of the vehicle transverse of the road, using the vehicle position recognizing device, can be executed in real time during driving of the vehicle.

In a fourth aspect, the present invention provides a vehicle location (position) recognizing method including: capturing image information by obtaining an image of at least the surface of a road with an imaging device mounted on the vehicle; acquiring feature-of-road information relating to a ground object within and/or near the imaged area presented by the image information, from map information; recognition processing the image information, to recognize the image of the ground object within the captured image information; and pinpointing the location of the vehicle across the width of the road (transverse position), based on the acquired feature-of-road information, and on the location (position)of the ground object(s) recognized in the image information.

Accordingly, by employing the feature-of-road information relating to ground objects, within the vicinity of the imaged position of the imaged area, acquired from map information, in addition to the image information picked up by the imaging device mounted on the vehicle, the position of the ground object recognized in the image information can be compared with the feature-of-road information, whereby the position of the vehicle transverse of the road can be pinpointed.

In a fifth aspect the present invention provides a vehicle location recognizing method including: capturing image information by obtaining an image including at least the surface of a road which has been picked up with an imaging device mounted on the vehicle; acquiring feature-of-road information relating to a ground object(s), in the vicinity of the imaged area represented by the image information, from map information, for multiple different positions across the width of the road; image processing the captured image information to recognize the image of the ground object therein; and pinpointing the vehicle location transverse of the road, on the basis of one position's feature-of-road information having the highest consistency identified by comparing the feature-of-road information for each of the multiple different positions with the location (position) of the ground object(s) which has/have been recognized in the image information. In this manner, the burden of (amount of) data processing in pinpointing the location of the vehicle, e.g. lane, transverse of the road can be reduced.

In a sixth aspect the present invention provides a vehicle location recognizing method including: capturing image information for at least the surface of the road using an imaging device mounted on the vehicle; image recognition processing of the image information to recognize the image of a ground object included in the image information; estimating the location (position) of the vehicle transverse of the road, based on the information from one or both of (1) current vehicle information relating to the route of the vehicle acquired from the vehicle, and (2) information relating to the routes previously driven by the vehicle acquired from a stored database; and pinpointing the location of the vehicle transverse of the road, based on the location of the image of the ground object recognized in the image information, and on the results of estimation.

Thus, the vehicle position recognition apparatus and method of the present invention can pinpoint the location of the vehicle relative to the width of the road (transverse location or position) and in the longitudinal direction of the road, and, accordingly, can be advantageously employed in the power steering of the vehicle, such as lane keeping and the like, driving control such as vehicle speed and the like, in any vehicle equipped with a navigation apparatus.

### The invention will be further described with reference to the drawings:

Fig. 1 is a block diagram schematically illustrating the hardware configuration of a vehicle position recognition apparatus according to a first embodiment of the present invention.

Fig. 2 is a schematic diagram illustrating an example of placements of imaging devices in a vehicle equipped with a location recognition apparatus according to the first embodiment of the present invention.

Fig. 3 is a diagram illustrating the structure of map information stored in a map information database for use with the vehicle position recognition apparatus according to the first embodiment of the present invention.

Fig. 4 is a flowchart of an image recognition routine executed by the vehicle location recognition apparatus according to the first embodiment of the present invention.

Fig. 5 is a flowchart of the subroutine executed in step S06 in Fig. 4.

Fig. 6 is a flowchart of the subroutine executed in step S07 in Fig. 4.

Fig. 7A illustrates one example of ground objects for which image information is picked up by the imaging device.

Fig. 7B illustrates one example of the image information following pre-processing of the image information shown in Fig. 7A.

Fig. 8 is a diagram illustrating a model of one example of the feature-of-road information acquired by feature-of-road information acquisition unit of the vehicle position recognition apparatus according to the first embodiment of the present invention.

Fig. 9A is a diagram of only the paint markings (lane lines) extracted in step S63 from the image information.

Fig. 9B is a diagram illustrating classification of a region in accordance with recognition of the lane lines shown in Fig. 9A.

Fig. 10 is a graph of the results of detection of edge points, as distributed across the width of the road, in the image information shown in Figs. 7A and 7B.

Fig. 11 is a diagram illustrating various ground objects to be recognized by the image information recognition unit in the image recognition apparatus according to the first embodiment of the present invention.

Fig. 12 is a diagram illustrating one example of a method for pinpointing the position of the vehicle by the vehicle position pinpointing unit of the vehicle location recognition apparatus according to the first embodiment of the present invention.

Fig. 13 is a block diagram schematically illustrating the hardware configuration of a vehicle recognition apparatus according to a second embodiment of the present invention.

Fig. 14 is a flowchart of an recognition routine executed by the vehicle location recognition apparatus according to the second embodiment of the present invention.

Figs. 15A through 15C are diagrams illustrating one example of the feature-of-road information acquired by the feature-of-road information acquisition unit in the vehicle location recognition apparatus according to the second embodiment of the present invention.

Fig. 16 is a diagram illustrating data in an information comparative format obtained from the classified-by-lane feature-of-road information shown in Figs. 15A through 15C.

### First Embodiment

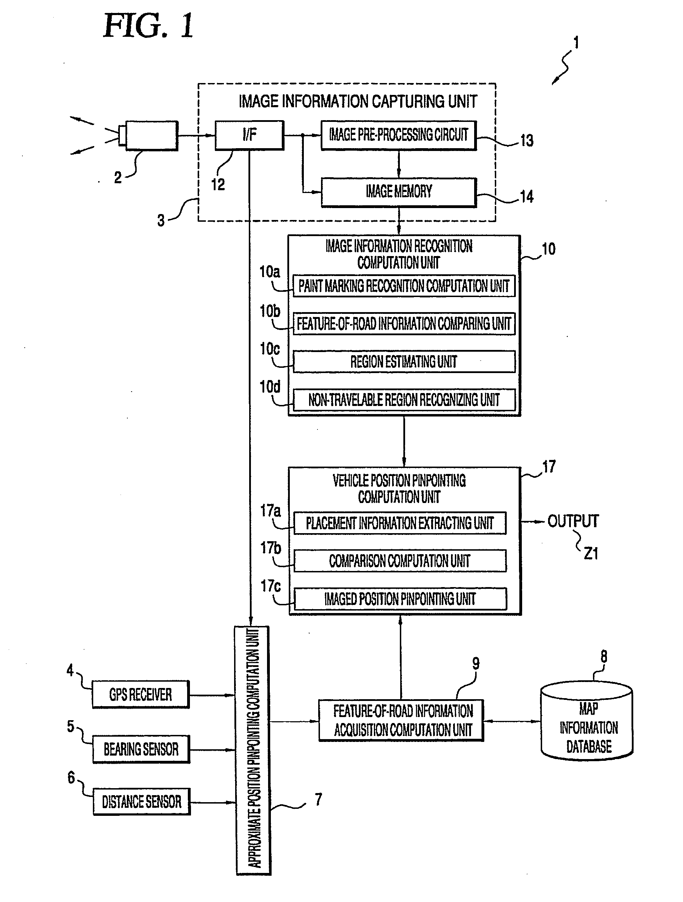

A first embodiment of the present invention will be described with reference to Fig. 1.

The vehicle position recognition apparatus 1 according to the first embodiment executes processing for pinpointing the position of vehicle M on a road 11, i.e., the position pinpointed relative to width and length of the road, based on the image results of recognition processing of the image information picked up with an imaging device 2, and feature-of-road information C obtained from stored map information.

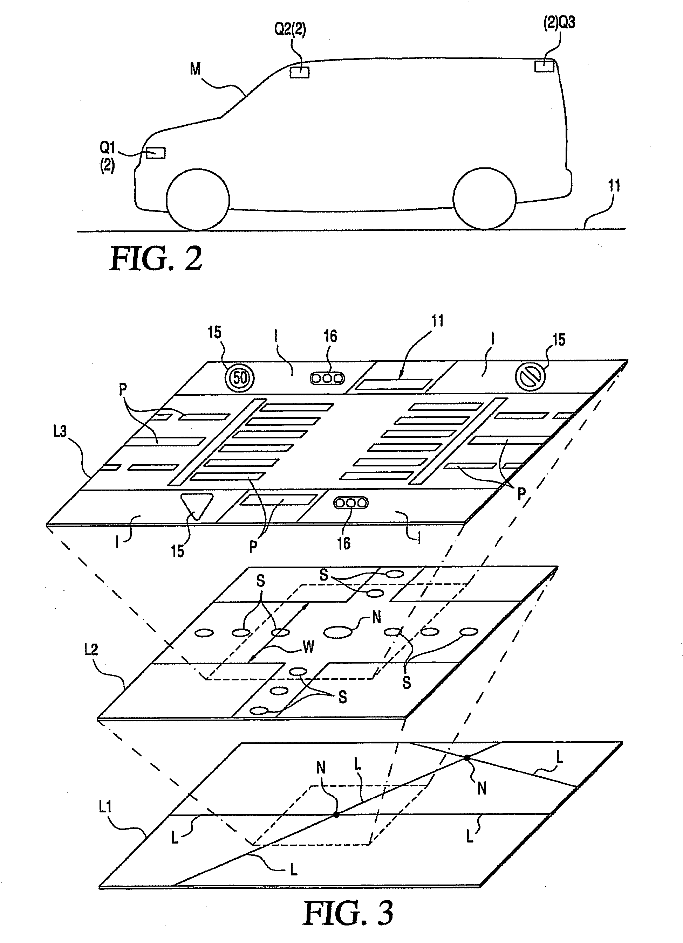

As shown in Fig. 1, the vehicle location recognition apparatus 1 of the first embodiment includes an image information capturing unit 3 for capturing image information G from the imaging device 2 mounted on the vehicle M (see Fig. 2), a GPS (Global Positioning System) receiver 4, position approximation unit 7 for approximating the location of the area imaged with the imaging device 2, based on the output from a bearing sensor 5 and a distance sensor 6, a feature-of-road information acquisition unit 9 for acquiring the feature-of-road information C relating the ground objects within the vicinity of the imaged area approximated by unit 7, from the map information stored in a map information database 8, an image information recognition unit 10 for processing the image information G using the acquired feature-of-road information C, and for recognizing image(s) of the ground object(s) included in the image information G, and a vehicle position pinpointing unit 17 for pinpointing the location of the vehicle M within the road 11 based on the acquired feature-of-road information C and the location(s) of the ground object(s) recognized within the image information G.

The position approximation unit 7, GPS receiver 4, bearing sensor 5, distance sensor 6, and map information database 8 are mounted on the vehicle, enabling use in conjunction with a navigation system also mounted on the vehicle. The position approximation unit 7, GPS receiver 4, bearing sensor 5, distance sensor 6, and the like, of the first embodiment, constitute the "position information acquiring means" according to the present invention.

The imaging device 2 may be a plurality of CCD sensors, CMOS sensors, or the like, in combination with lenses making up an optical system for guiding light into the imaging devices. Imaging devices 2 are disposed at the positions shown as Q1 through Q3 in Fig. 2, for example towards the front and/or back of the vehicle M, to enable at least the road surface of the road 11 to be photographed, together with an area alongside the road 11. The imaging device 2, is preferably an on-board camera(s) or the like, positioned to pick up images to the front and/or back and of the vehicle M.

The image information capturing unit 3 includes an interface circuit 12 for connecting to the imaging device(s) 2, an image pre-processing circuit 13 for pre-processing the image information G obtained from the imaging device 2, and image memory 14 for storing the image information G which has been subjected to the pre-processing. The interface circuit 12 includes an analog/digital converter, repeatedly captures the analog image information G picked up with the imaging device 2 at a predetermined time interval, converts this analog signal into a digital signal, and outputs this digital signal to image pre-processing circuit 13 as image information G1. The time interval for capturing of the image information G using this interface circuit 12 can be set at 10 - 50 milliseconds (ms) or so, for example. Thus, the image information capturing unit 3 can capture the image of the road 11 where the vehicle M is traveling almost continuously. The image pre-processing circuit 13 processes the digital signal to facilitate image recognition using the image recognition unit 10, and routines such as binarization and edge detection, thereby producing pre-processed image information G2. Subsequently, the pre-processed image information G2 is stored in the image memory 14.

The interface circuit 12 also outputs the image information G directly to the image memory 14, apart from the image information G sent to the image pre-processing circuit 13. Accordingly, both the pre-processed image information G2 and image information G1 as is (not subjected to the pre-processing), are stored in the image memory 14.

In the present embodiment, this image information capturing unit 3 serves as the "image information capturing means" of the present invention.

The position approximation unit 7, is connected to the GPS receiver 4, bearing sensor 5, and distance sensor 6. The GPS receiver 4 is a device for receiving a signal from GPS satellite(s), and can obtain various items of information, such as the vehicle position (latitude and longitude), traveling speed, and the like, from the GPS receiver 4. The bearing sensor 5 is a magnetic field sensor, gyro sensor, optical rotation sensor or a potentiometer mounted for rotation with the steering wheel, an angle sensor mounted in association with a wheel, and the like, for detecting the traveling direction of the vehicle M. The distance sensor 6 is a vehicle speed sensor for detecting the rpm of the wheels or a yaw and G sensor, for detecting acceleration in the speed of the vehicle M, in combination with a circuit for integrating the detected accelerated speed twice, for determination of the distance traveled by of the vehicle M. Subsequently, the position approximation unit 7 approximates the current position of the vehicle M based on the output from the GPS receiver 4, bearing sensor 5, and distance sensor 6. The position of the vehicle M thus computed is taken as the position of the imaging device 2.

The precision of the approximation of the position of the vehicle by unit 7 is affected by the precision of the GPS receiver and, for this reason, includes a margin of error on the order of tens of meters. Accordingly, position approximation unit 7 cannot pinpoint the position of the vehicle M relative to either the width of the road or the length of the road.

The position approximation unit 7 is also connected to the interface circuit 12 of the image information capturing unit 3. This interface circuit 12 outputs a signal to the position approximation unit 7 in sync with the imaging timing of the imaging device 2. Accordingly, the position approximation pinpointing unit 7 can approximate the imaged area of the image information G by computing the position of the imaging device 2 based on the timing of receipt of signals from interface circuit 12. The imaged area of the image information G thus approximated by the position approximation unit 7 is represented by latitude and longitude, and is output to the feature-of-road information acquisition unit 9.

This position approximation unit 7 combines a functional unit, which may be hardware, software, or both, with an arithmetic processing unit such as an CPU or the like as a core member.

The feature-of-road information acquisition unit 9 is connected to the position approximation unit 7 and the map information database 8.

As shown in Fig. 3, a road-network layer L1, a road-form layer L2, and a ground object layer L3 are stored in the map information database 8 as map information utilized in the present embodiment.

The road-network layer L1 is a layer of data indicating connections between the roads 11. More specifically, this data layer includes data for a great number of nodes N having map positions represented by latitude and longitude, and data for a great number of links L of road 11, each connecting a pair of adjacent nodes N. Also, for each link L, information such as the type of the road 11 (such as expressway, toll road, federal highway, or state highway), link length, and the like is stored as link information thereof.
The road-form layer L2 is stored in association with the road-network layer L1, and indicates the shape of the road 11. Specifically, layer L2 includes data for a great number of road-form complementary points S having their map positions represented by latitude and longitude which are disposed between two nodes N (on the link L), and data for road width W at each road-form complementary point S.

The ground object layer L3 is stored in association with the road-network layer L1 and road-form layer L2, and contains data indicating each type of ground object provided on and adjacent the road 11. The ground object data stored in this ground object layer L3 includes data for position, shape, and/or color of the ground objects to be recognized by vehicle position recognition apparatus 1. More specifically, the ground object data of this layer includes the map positions of the road-form complementary points S and nodes N, shapes, colors, etc. of paint markings P on the surface of the road 11, non-travelable regions I adjacent the road 11, and various types of ground objects such as traffic signs 15, traffic signals 16, and the like provided on the road 11. Here, the paint markings P include, for example, lane lines separating lanes (including data indicative of the type of lane lines such as solid line, broken line, double lines, etc.), zebra zones, traffic zone markings specifying the direction of traffic in each lane, stop lines, pedestrian crossings, speed signs, and the like. Also, although not painted, manholes in the surface of the road 11 are also included in the paint markings P data. The non-travelable regions I include, for example, road shoulders, sidewalks, median strips, and the like, which are adjacent the road 11.

Note that the map information database 8 comprises, as hardware, a device having a recording medium capable of storing information, and a driver therefor, such as a hard disk drive, a DVD drive for a DVD-ROM, a CD drive for a CD-ROM, and the like, for example.

Subsequently, the feature-of-road information acquisition unit 9 computes and acquires the feature-of-road information C, relating to the ground objects in the vicinity of the imaged area represented by the image information G, from the map information stored in the map information database 8, based on the data for latitude and longitude of the imaged area of the image information G approximated by the position approximation unit 7. Here, the feature-of-road information acquisition unit 9 extracts the ground object information, such as the positions, shapes, colors, and the like, for the ground objects included within at least the vicinity of the imaged area represented by the image information G, from the ground object layer L3 of the map information database 8, as the feature-of-road information C.

This feature-of-road information acquisition unit 9 includes a functional unit for processing input data, implemented in the form of hardware, software or both, and an arithmetic processing unit, such as a CPU or the like, as a core member.

In this first embodiment, this feature-of-road information acquisition unit 9 serves as the "feature-of-road information acquiring means".

The image information recognition unit 10 executes image recognition processing of the image information G, for recognizing the image(s) of the ground object(s) included in the image information G. With the present embodiment, the image information recognition unit 10 is connected to the image memory 14 of the image information capturing unit 3, and to the feature-of-road information acquisition unit 9, and in processing of the image information G utilizes the feature-of-road information C.

The ground object(s) searched for by the image information recognition unit 10 correspond to the paint markings P, non-travelable regions I, and other ground objects stored in the ground object layer L3, such as the various types of traffic signs 15, traffic signals 16, and the like.

The image information recognition unit 10 includes a functional unit for processing input data, in the form of hardware, or software or both, and an arithmetic processing unit such as an CPU or the like as a core member.

In this first embodiment, the image information recognition unit 10 serves as the "image information recognizing means."

The image recognition processing of the image information G, using the feature-of-road information C in the image information recognition unit 10, may be executed, for example, by either of or a combination of the following two methods.

One image recognition method extracts the image candidates for the ground object from the image information G, compares the extracted image candidates with the feature-of-road information C, and recognizes that image candidate having the highest degree of conformance with the feature-of-road information C as the image of the ground object.

A second image recognition method estimates the region containing the image of the ground object within the image information G, based on the feature-of-road information C, adjusts an image recognition algorithm so as to lower the determining standard for a "match" with the ground object for the estimated region, as compared with the other regions, and then recognizes the image of the ground object within the image information G.

In this first embodiment, the image information recognition unit 10 recognizes the paint markings P on the surface of the road 11, and the non-travelable region I adjacent to the road 11, by execution of, for example, combination of the above-identified first and second image recognition processing methods. To this end, the image information recognition unit 10 comprises a paint marking recognition unit 10a, a feature-of-road information comparing unit 10b, a region estimating unit 10c, and a non-travelable region recognizing unit 10d.

The vehicle position pinpointing unit 17 pinpoints the specific location of the vehicle M on the road 11, based on the feature-of-road information C acquired by the feature-of-road information acquisition unit 9, and the position within the image information G of the image of the ground object recognized by the image information recognition unit 10. In this manner, the present embodiment pinpoints the detailed positions of the vehicle M both widthwise of the road and longitudinally along the road.

With the present embodiment, the vehicle position pinpointing unit 17 may pinpoint the specific position of the vehicle M, both widthwise of the road and longitudinally of the road, by comparing the location within the image information G of the image of at least one ground object, which has been recognized by the image information recognition unit 10, with the position information for the same object. To this end, this vehicle position pinpointing unit 17 comprises a position information extracting unit 17a, a comparison unit 17b, and an imaged location pinpointing unit 17c.

The vehicle position pinpointing unit 17 includes a functional unit for processing input data, in the form of hardware, software or both, and an arithmetic processing unit, such as an CPU or the like as a core member.

In the present embodiment, this vehicle position pinpointing unit 17 serves as the "vehicle position pinpointing means."

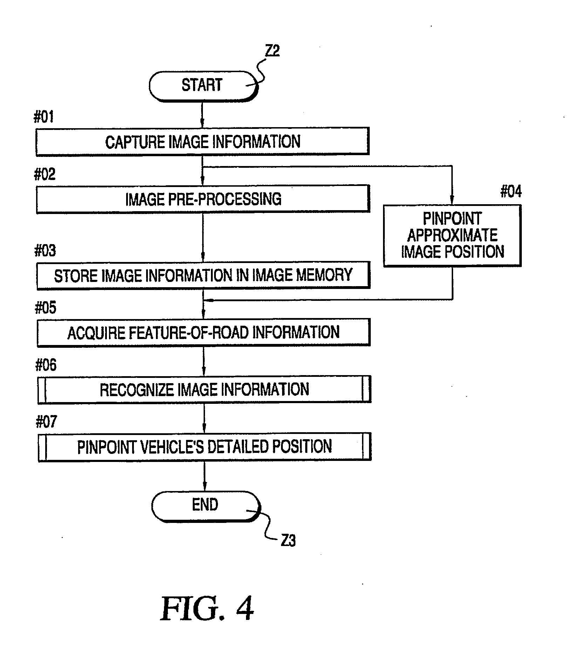

A specific example of pinpointing the location of vehicle M within the road 11, based on the acquired feature-of-road information C acquired utilizing the result of image recognition processing of the image information picked up with the imaging device 2, and the map information, will now be described with reference to the flowcharts shown in Figs. 4 through 6.

As shown in Fig. 4, the vehicle position recognition apparatus 1 first executes a routine for capturing the image information G picked up with the imaging device 2 (step S01). Specifically, the vehicle position recognition apparatus 1 transmits the image information G, picked up with the imaging device 2, such as an on-board camera or the like, to the image pre-processing circuit 13 and to the image memory 14 via the interface circuit 12. Also at this time, the interface circuit 12 outputs a signal to the position approximation unit 7 in sync with the timing of capturing of the image information G from the imaging device 2, i.e., almost in sync with the timing of imaging by the imaging device 2. This signal informs the position approximation unit 7 of the timing of imaging.

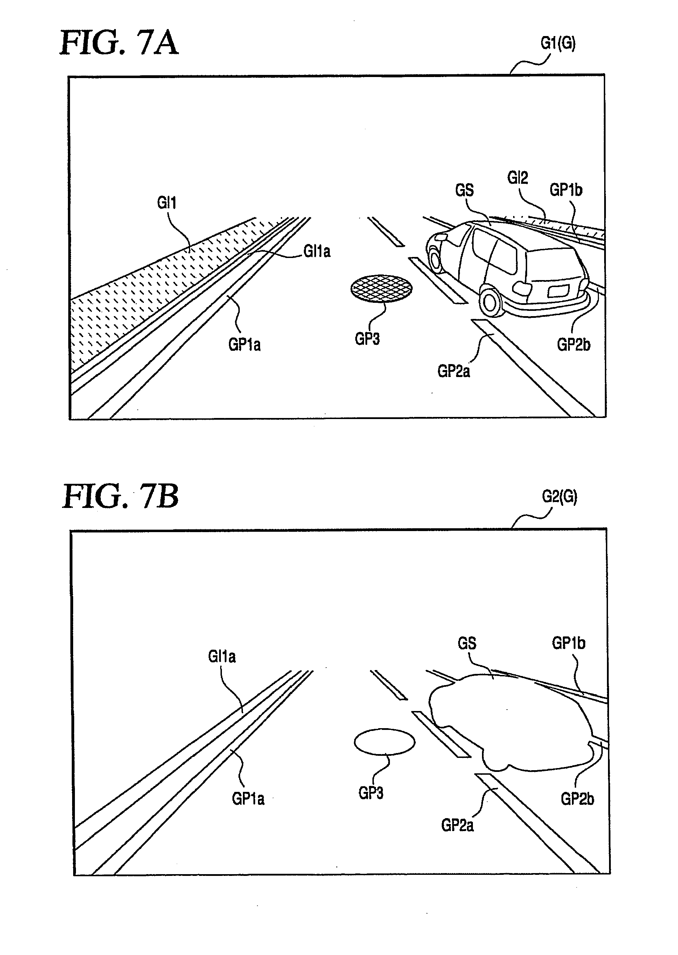

The image pre-processing circuit 13, which receives input of the image information G, subjects the image information G to pre-processing (step S02). This pre-processing involves, for example, execution of routines for facilitating image recognition by the image information recognition unit 10, such as binarization, edge detection processing, or the like. Fig. 7A is an example of the image information G (G1) picked up with the imaging device 2, and Fig. 7B is an example of the image information G (G2)after pre-processing of the image information G1. In the example shown in this Fig. 7B, images in the form of outlines of the ground objects G picked up with the edge detection routine are extracted. Subsequently, the pre-processed image information G2 (step S02), and the image information G1 directly transmitted from the interface circuit 12 are both stored in the image memory 14 (step S03).

The position approximation unit 7 approximates the imaged area of the image information G in parallel with the processing in steps S02 and S03 (step S04). Specifically, when the signal indicating the timing of capture of the image information G is output from the interface circuit 12, the position approximation unit 7 computes the approximate current position of the vehicle M, taking into account the timing of imaging by the imaging device 2, based on signals from the GPS receiver 4, bearing sensor 5, and distance sensor 6. The information for the approximated current position is then transmitted to the feature-of-road information acquisition unit 9 in the form of data for latitude and longitude.

Next, the feature-of-road information acquisition unit 9 processes the transmitted information to acquire the feature-of-road information C, relating to the ground objects in the vicinity of the imaged area represented by the image information G, from the map information stored in the map information database 8 (step S05). At this time, the feature-of-road information acquisition unit 9 extracts and acquires the feature-of-road information C, within a certain range R around the position approximated in step S04, from the wide range map information stored in the map information database 8. Here, the range R is preferably set so as to include at least the region represented by the image information G picked up using the imaging device 2.

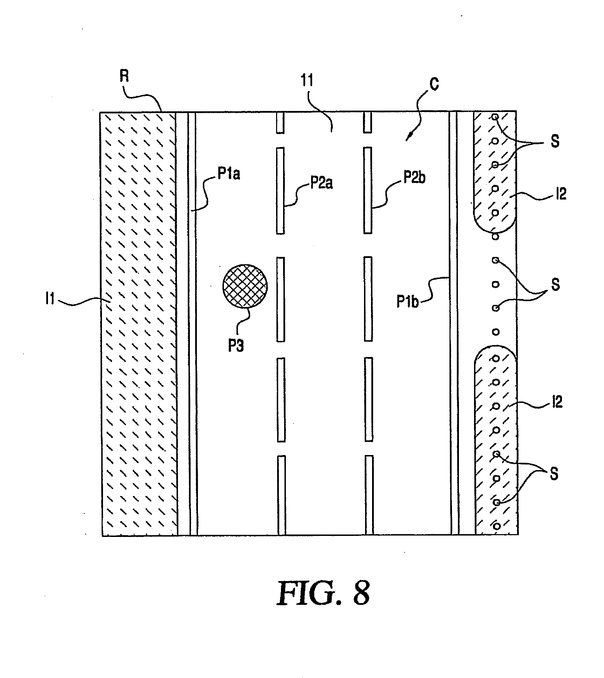

Fig. 8 illustrates one example of the feature-of-road information C acquired by the feature-of-road information acquisition unit 9. In the present example, the ground objects included in the feature-of-road information C, are the paint markings P including the two solid lane lines P1a and P1b indicating the outer edges of the traffic lanes of the road 11 made up of three lanes in each direction, two broken lane lines P2a and P2b which partition the three lanes, and a manhole P3 in the leftmost of the three lanes, and also the non-travelable regions I including a sidewalk I1 adjacent the left side of the road 11, and a median strip I2 adjacent the right side of the road 11. Note that Fig. 8 is merely an example, and that various other ground objects can be included in the feature-of-road information C, depending on the imaged area of the image information G.

The contents of this feature-of-road information C include the position information, shape information, and color information for the respective ground objects. Here, the position of each ground object is represented by position information on the basis of the road-form complementary points S included in areas where the nodes N, such as an intersection or the like, are located. For example, referring to the paint markings P, the solid lane lines P1a and P1b, and the broken lane lines P2a and P2b, or the non-travelable region I, the sidewalk I1, the median strip I2, and the like, are all ground objects extending along the road 11, and are represented only by the distance (amount of offset) from the road-form complementary points S (or nodes N). On the other hand, for example, with the ground objects which do not extend along the road 11, such as the manhole cover P3, stop lines, traffic signs, and the like, the position information therefor is represented by both the distance and orientation (direction) from the specific complementary point S (or node N).

The shape information for each ground object includes data for the length, width, and height dimensions, and for the type of shape, e.g. silhouette. This shape information is preferably represented in a simplified form so as to facilitate the comparison with the image information G.

If a ground object has multiple different colors, such as road traffic signs and the like, the color information for such a ground object is preferably stored as color information for each region of the shape.

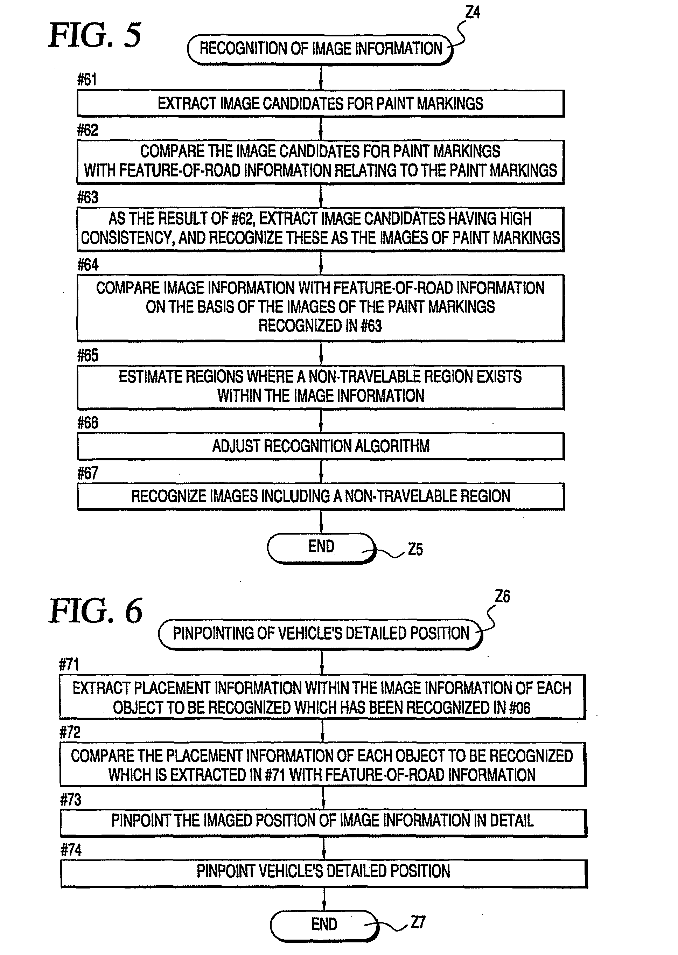

Next, the image information recognition unit 10 executes image recognition processing of the image information G for recognizing the images of the ground objects included in the image information G (step S06). In the present embodiment, if the images of the ground objects to be recognized in the image information G are paint markings P and non-travelable regions I, the image recognition of the paint markings P, for which recognition is comparatively easy, is performed first, followed by adjustment of the recognition algorithm based on the results of that recognition, and then the image recognition of the non-travelable regions, for which recognition is more difficult than that of the paint markings P, is performed. A specific example of such an image recognition sequence, applied to the image information G, is shown in the flowchart in Fig. 5.

The reason why the image recognition of the non-travelable regions I is more difficult than that of the paint markings P is that, with the paint markings P, the contrast in luminescence and color relative to the surface of the road 11 is so great that image recognition is comparatively easy, while on the other hand, with the non-travelable regions I such as a road shoulder, sidewalk, median strip, and the like, the contrast in luminescence and color relative to the road 11 and its surrounding area is small, so that in many cases it is difficult to pinpoint the outlines of regions I, even with edge detection and the like.

With this image recognition processing of the image information G, as shown in Fig. 5, first the paint marking recognition unit 10a of the image information recognition unit 10 processes the image information G to extract image candidates having the possibility of being the paint markings P, from the image information G (step S61). Specifically, as shown in Fig. 7B, the paint marking recognition unit 10a extracts those images having the highest degree of conformance to predetermined feature data, such as a template representing the paint markings P (lane lines), manhole covers, and the like, from the pre-processed image information G2, and takes these as the image candidates for the paint markings P. With the example shown in Figs. 7A and 7B, the image GS of the vehicle traveling ahead, and the image GP2b of the broken lane lines on the right side which overlap therewith are eliminated from the image candidates, and the remaining images, i.e., the image GP2a of the broken lane line on the left side, the image GP1a of the solid lane line on the left side, the image GIla of the curbstone of the sidewalk on the outside thereof, the image GP1b of the solid lane line on the right side, and the image GP3 of the manhole are extracted as the image candidates for the paint markings P.

Subsequently, the feature-of-road information comparing unit 10b of the image information recognition unit 10 compares the image candidates of the paint markings P extracted in step S61 with the information relating to the paint markings P in the feature-of-road information C acquired in step S05 (step S62). As the result of this comparison, the feature-of-road information comparing unit 10b extracts the image candidates having the highest consistency with each item of information, e.g. positional relationship, shape, color, and luminescence, and recognizes the extracted image candidates as the image of the paint markings P (step S63). With Fig. 8, based on the feature-of-road information C relating to the paint markings P, the positional relationships (intervals) of the solid and broken lane lines P1a, P1b, P2a, and P2b, the positional relation of these lane lines relative to the manhole P3, and the shapes, colors, and luminescence of these lane lines P1a, P1b, P2a, and P2b, and the manhole P3, and the like can be understood. Accordingly, only the image candidates having highest probability of being the paint markings P are extracted, as candidate images for the paint markings P, from the image information G, based on consistency with the feature-of-road information C. In the case of the example shown in Figs. 7A and 7B, the image GIla of the curbstone of the sidewalk on the outside of the image GP1a of the solid lane line on the left side is eliminated by the processing in this step S63. Subsequent to such elimination, the remaining extracted candidate images are recognized as the images of the paint markings P. Note that the information such as the colors and luminescence of the paint markings P can be acquired from the image information G, which has not been subjected to the pre-processing, stored in the image memory 14.

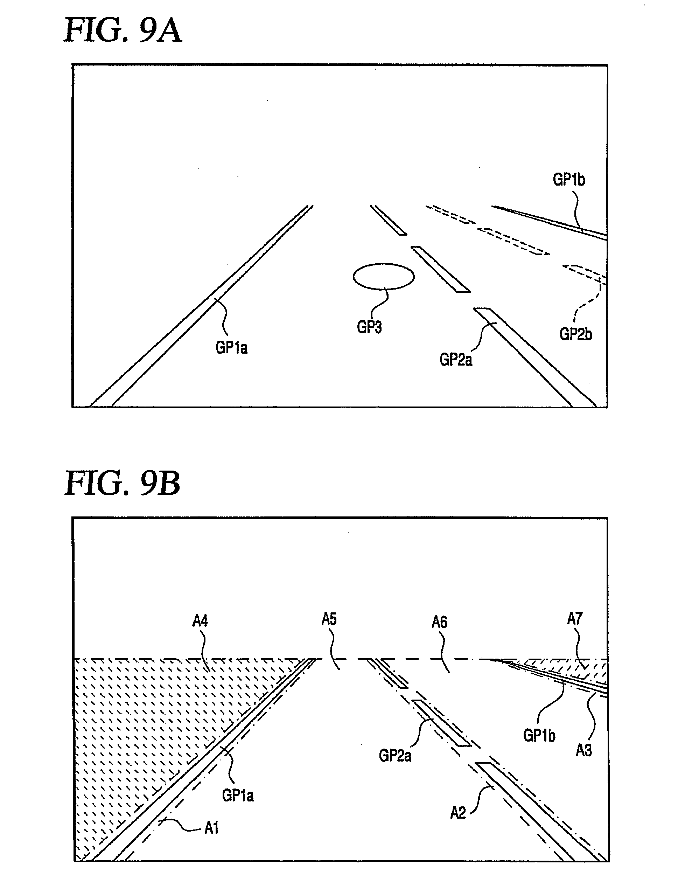

Fig. 9A is a diagram representing only the images of the paint markings P extracted in the processing of step S63 from the image information G. Note that the image GP2b of the broken lane line on the right side is eliminated from the image candidates for the paint markings P, along with the image GS of the vehicle, and are not included in the images of the paint markings P extracted here (shown by dotted lines in Fig. 9A).

Next, the feature-of-road information comparing unit 10b collates the image information G and the feature-of-road information C on the basis of the recognized images of the paint markings P (step S64). That is to say, the information for each ground object included in the feature-of-road information C can be matched with the image data included in the image information G, i.e. matching the positions of the recognized images of the paint markings P within the current image information G with the positions of the paint markings P included in the stored feature-of-road information C. At this time, the positional relationships widthwise of the road 11 can be correctly matched by employing as reference points the ground objects such as the lane lines GP1a and GP2a, and the like provided along the road 11, and the positional relationship lengthwise of the road 11 can be correctly matched by employing as reference points the ground objects such as the manhole cover P3, an unshown stop line, traffic sign, and the like, which do not extend along the length of the road 11.

Subsequently, the region estimating unit 10c of the image information recognition unit 10 estimates the regions where the images of the non-travelable region I within the image information G exist based on the collating results between the feature-of-road information C and the image information G in step S64 (step S65). That is to say, if based on agreement between the feature-of-road information C and the image information G in the above step S64, the positions of the images of the respective ground objects including the paint markings P and the non-travelable regions I within the image information G can be estimated. Thus, the region estimating unit 10c computes (estimates) the regions within the image information G corresponding to the positions and shapes of the non-travelable regions I included in the feature-of-road information C, based on the results obtained in step S67.

As shown in Fig. 9B, the image range picked up as the image information G is divided into regions A1 through A3 in which are located the lane lines P1a, P1b, and P2a, respectively belong, and into regions A4 through A7 sandwiched by these regions A1 through A3, based on the lane lines P1a, P1b, and P2a within the paint markings P recognized in step S63. Subsequently, the region estimating unit 10c estimates the regions containing the images of the non-travelable regions I by determining whether or not the respective regions A4 through A7 include the non-travelable regions I based on the results of collation in step S64. In this case, as shown in Fig. 8, it can be determined that the non-travelable regions I are located outside of the solid lane lines P1a and P1b on both sides of the road 11, respectively, based on the feature-of-road information C, and accordingly, the region estimating unit 10c can estimate that the images of the non-travelable regions I exit within the regions A4 and A7, on the outside of the regions A1 and A3, in which the solid lane lines P1a and P1b are located on opposite sides of the road 11.

Next, the recognition algorithm in the non-travelable region recognizing unit 10d of the image information recognition unit 10 is adjusted based on the results obtained in step S65 (step S66), and the non-travelable region recognizing unit 10d executes image recognition processing to identify the images of the non-travelable regions I included in the image information G (step S67).

In the present embodiment, regarding the regions A4 and A7 estimated to contain images of the non-travelable regions I in step S8, the recognition algorithm is adjusted so as to lower the standard for determination whether or not a given region is included in the non-travelable regions I, as compared to standard(s) for other regions (in this case, regions A5 and A6). That is to say, as described above, with regard to the non-travelable regions I such as the sidewalk I1, median strip I2, road shoulder, and the like, the difference in luminescence and color between the road 11 and the surroundings thereof is small, so that in many cases it is difficult to pinpoint the outlines thereof, even with edge detection or the like, and in general, image recognition is more difficult than that for the paint markings P. To this end, regarding the regions A4 and A7 where the location(s) of the images of the non-travelable regions I have been estimated, the rate of recognition of the non-travelable regions I can be improved by adjusting the recognition algorithm so as to more readily recognize non-travelable regions I as compared with the other regions.

In order to adjust the recognition algorithm so as to lower the standard for determination whether or not a given region is included in the non-travelable regions I, instead of lowering of the standard for the regions A4 and A7 where existence of the non-travelable regions I has been estimated, relative to the other regions, the reference standard for the other regions may be elevated relative to the regions A4 and A7

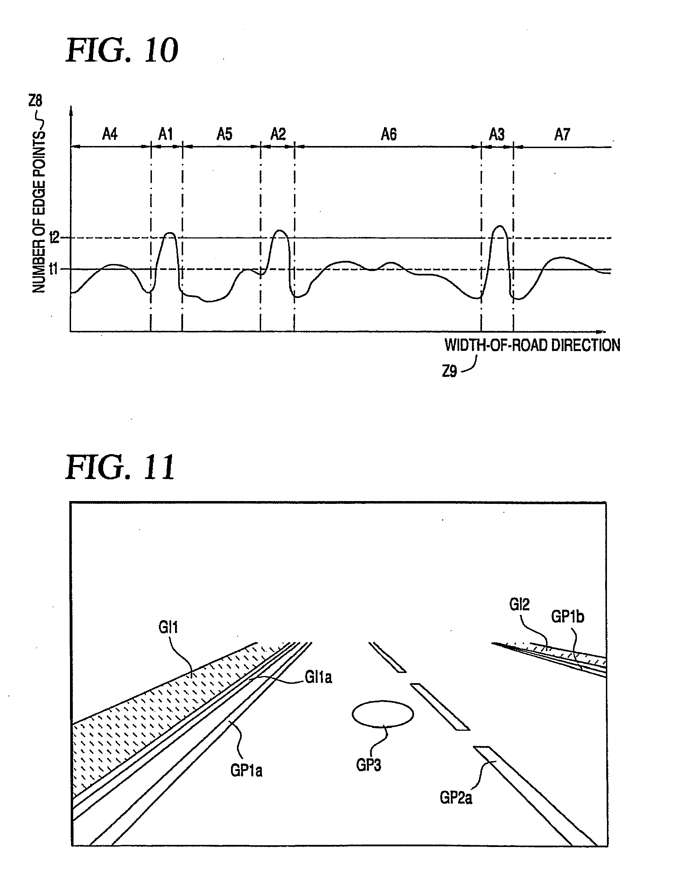

For example, as the recognition algorithm for the images of the non-travelable regions I, the present embodiment employs an algorithm for processing the image information G to detect the edge points at each position across the width of the road 11, i.e. edge detection processing, and for recognizing a region, where the number of detected edge points is equal to or greater than a predetermined threshold value, as non-travelable region I. As shown in Fig. 10, a first threshold value t1 is set low, and a second threshold value t2 is set high relative to t1. That is to say, the first threshold t1 is employed within the regions A4 and A7 where the non-travelable regions I have been estimated to be located, and the second threshold value t2 is employed within the other regions A5 and A6, and thus, the recognition algorithm is adjusted so as to lower the determining standard for the regions A4 and A7, where non-travelable regions I are estimated to be located, relative to the other regions A5 and A6.

Fig. 10 is a graph illustrating the result of detecting, in the image information G shown in Figs. 7A and 7B, the number of edge points at each position across the width of the road 11. As shown in Fig. 10, the regions A1 through A3 contain the lane lines P1a, P1b, and P2a, so the number of edge points is large, but these regions A1 through A3 do not become a target of image recognition of the non-travelable regions I. The region A5, other than the manhole P3, contains only the asphalt road surface, so the number of edge points is small.

On the other hand, within the regions A4, A6, and A7, the number of edge points is somewhat larger. In the regions A4 and A7, the number of edge points detected will be large because these regions contain non-travelable regions I such as the sidewalk I1 and the median strip I2, but on the other hand, in the region A6 the number of edge points is large because region A6 contains the image Gs of the vehicle ahead, and the broken lane line GP2b hidden by the image Gs of the vehicle. However, it is difficult to determine whether or not a given region is a non-travelable region I based only on the number of detected edge points.

Based on the results of estimation in step S65, the first threshold value t1 is set low, for determining the existence of non-travelable regions I within the regions A4 and A7 as has been estimated, and the second threshold value t2 is set to a higher value for determining whether non-travelable regions I are located within the other regions A5 and A6. Thus, based on the results of estimation in step S08, detection of the non-travelable regions I can be made more sensitive for the regions A4 and A7 where existence of images of the non-travelable regions I has been estimated, and also false detection can be prevented as to the non-travelable regions I within the other regions A5 and A6. Accordingly, the recognition rate of the non-travelable region I is improved. Appropriate values for the first threshold value t1 and second threshold value t2, may be obtained experimentally or statistically. Also, the first and second threshold values t1 and t2 may be variable values which change based on the other information extracted from the image information G, the signal from another sensor mounted on the vehicle M, or the like.

Thus, as described above, the image information recognition unit 10 processes the image information G, to recognize the images of the paint markings P and non-travelable regions I as "ground objects" included in the image information G. With the example of the image information G shown in Figs. 7A and 7B, as shown in Fig. 11, the images GP1a, GP1b, and GP2a of the lane lines P1a, P1b, and P2a, the image Gp3 of the manhole P3, the image GI1 of the sidewalk I1 on the left side of the image GP1a of the lane line P1a, and the image GI2 of the median strip I2 on the right side of the image GP1b of the lane line P1b are all respectively recognized.

Next, the vehicle position pinpointing 17, as shown in Fig. 4, pinpoints the position within the road 11 where the vehicle M is traveling, based on the feature-of-road information C acquired in step S05, and the position within the image information G of the image of the ground object which has been recognized in step S06 (step S07). In the present embodiment, the imaged area of the image information G is pinpointed by comparing the position within the image information G of the image of the ground object which has been recognized in step S06 with the position information for the same object included in the feature-of-road information C acquired in step S05, and thus, the vehicle position pinpointing unit 17 pinpoints the position of the vehicle M transverse of and longitudinally of the road.

A specific example of a routine for such pinpointing of the position of the vehicle M is shown in the flowchart of Fig. 6. First, the position information extracting unit 17a of the vehicle position pinpointing unit 17 extracts, from the image information G, information as to the position of each ground object which has been recognized in step S06 (step S71). The position information, within the image information G, for each ground object includes information as to its position within the image information G and information such as its shape and color. In the example of the image information G shown in Figs. 7A and 7B, as shown in Fig. 11, the ground objects represented by, the images GP1a, GP1b, and GP2a of the lane lines P1a, P1b, and P2a, the image Gp3 of the manhole cover P3, the image GI1 of the sidewalk I1, and the image GI2 of the median strip I2 are recognized, so that in step S71 information as to the positions within the image information G of these ground objects is extracted.

Next, the comparison unit 17b of the vehicle position pinpointing unit 17 compares the information for the position within the image information.G of each ground object extracted in step S71 with the feature-of-road information C acquired in step S05 (step S72) to obtain the best match.

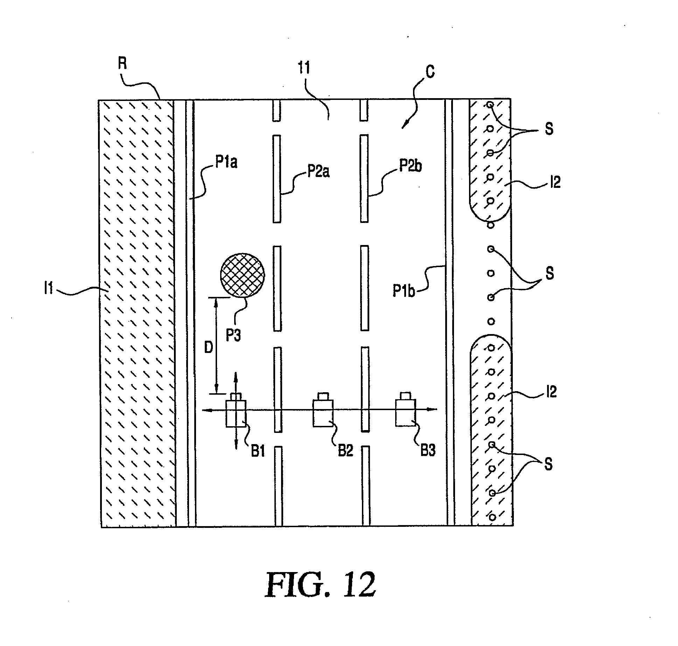

Subsequently, the imaged position pinpointing unit 17c of the vehicle position pinpointing unit 17 identifies the imaged area of the image information G (step S73). Fig. 12 is a diagram schematically representing this process. Thus, this process pinpoints the imaged area based on the result of the comparison in step S72, by matching the imaged area of the image information G, identified as that area which best matches the position of the images of ground objects recognized within the image information G, with the position of those ground objects within the feature-of-road information C, and pinpoints the position of the vehicle both traverse and longitudinally of the road 11.

Referring now to Fig. 11, first, in pinpointing the position of the vehicle widthwise of the road, upon analyzing the position of the image of each ground object within the image information G, it can be understood that, relative to the center of the image information G, the image GP2a of the broken lane line is on the right side, and the image GP1a of the solid lane line is on the left side. Also, it can be understood that the image GI1 of the sidewalk is on the right side of the image GP1a of this solid lane line, and further, that the image GP3 of the manhole cover is located between the image GP2a of the broken lane line on the right side and the image GP1a of the solid lane line on the left side. These images of the respective objects to be recognized (ground objects) are associated with the information for the respective ground objects included in the feature-of-road information C in step S72, and accordingly, based on the results of the positions of the images of the respective ground objects within the image information G, the imaged position widthwise of the road can be pinpointed as within the left-side lane of the road 11 made up of three lanes (position B1 is the current lane) within the feature-of-road information C shown in Fig. 12. Also, if based on the position within the image information G for the image GP1a of the solid lane line or the image GP2a of the broken lane line, and particularly if based on the position traverse to, i.e. across, the road, the position of the vehicle M can be pinpointed such as right-of-center or left-of-center within the left-side lane, or the like.

Note that, for example in the event that the imaged position of the image information G is in the center lane of the three lane road 11, shown as the position B2 in Fig. 12, the images of the broken lane lines P2a and P2b on both sides of the center of the image information G are recognized. Also, for example, in the event that the imaged position of the image information G is in the right-side lane of the three lane road 11, shown as position B3 in Fig. 12, relative to the center of the image information G, the image of the broken lane line P2b on the left side, and the image of the solid lane line P1b on the right side are respectively recognized.

To pinpoint the imaged position longitudinally on the road, rather than lane lines, sidewalks, and the like, the images of ground objects such as a manhole cover, stop line, traffic sign, traffic signals, and the like are used as reference points along the road 11, that is the positions of the images of objects which do not extend along the road 11 are analyzed. As shown in Fig. 11, for example, it can be understood that the image GP3 of the manhole cover does not extend along the road 11 as does, for example, a lane line. The imaging device 2 is fixed to the vehicle M at a predetermined height and is oriented in a predetermined direction and, therefore, the distance D from position of the the imaging device to the manhole cover P3 can be calculated based on the position within the image information G of the image GP3 of the manhole cover, and particularly based on the position in the height. Thus, the imaged position of the image information G can be pinpointed even in the longitudinal direction of the road. With the example shown in Fig. 12, this imaged position of the image information G is pinpointed as the position B1.

According to the above method, the imaged position of the image information G can be pinpointed both widthwise (transverse) and longitudinally of the road. The imaging device 2 is mounted on the vehicle M, so that its imaged position can be pinpointed as the precise position of the vehicle M (step S74).

The above-described series of process steps S01 through S07 is repeatedly executed at a predetermined time interval. Thus, the position of the moving vehicle can always be pinpointed in real time.

The pinpointed vehicle position obtained using the vehicle position pinpointing unit 17, for example, is output to a not shown driving control device, navigation device, or the like on the vehicle M, wherein it is employed for steering of the vehicle M such to stay within a given lane, and the like, and driving controls such as vehicle speed, and/or display of the precise position of the vehicle on the display of the navigation device.

### Second Embodiment

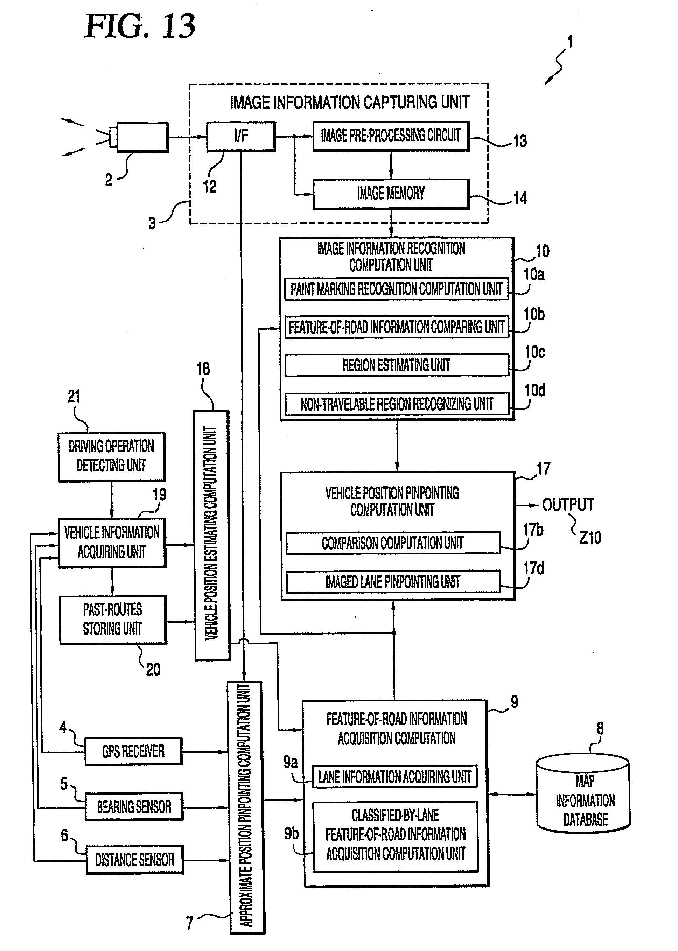

Next, a second embodiment of the present invention will be described with reference to Fig. 13 which is a block diagram of the hardware of a vehicle position recognition apparatus 1 according to the present invention.

The vehicle position recognition apparatus 1 according to this second embodiment is different from the above-described first embodiment in that the feature-of-road information acquisition unit 9 acquires the feature-of-road information C, relating to the ground objects around the imaged position of the image information G, from map information stored in the form of classified-by-lane feature-of-road information C', with multiple positions different for each lane of the road 11 as reference points. The lane position of the vehicle M is pinpointed by comparing each of the thus classified reference points, i.e. feature-of-road information C' with the location (position) of the ground object within the image information G.

Also, the vehicle position recognition apparatus 1 of this second embodiment is different from the first embodiment in that the vehicle position recognition apparatus 1 of this second embodiment comprises a vehicle position estimating unit 18 for acquiring information from the vehicle M relating to the route of the vehicle M and to the routes previously traveled by the vehicle M, for estimating the lane position of the vehicle M, and for pinpointing the lane position of the vehicle M using the result of estimation by the vehicle position estimating unit 18.

As shown in Fig. 13, the vehicle position recognition apparatus 1 according to the second embodiment includes, in addition to the components of the first embodiment, the vehicle position estimating unit 18. This vehicle position estimating unit 18 is connected to a vehicle information acquiring unit 19 for acquiring information from the vehicle M relating to the route of the vehicle M, and to a previous route storing unit 20 for acquiring and storing information relating to the routes previously traveled by the vehicle M, and executes a process for estimating the lane in which the vehicle is currently traveling, based on this acquired information. Subsequently, the result of this estimation by the vehicle position estimating unit 18 is output to the feature-of-road information acquisition unit 9, where it is processed to acquire the classified-by-lane, feature-of-road information C'.

In this second embodiment, the vehicle position estimating unit 18 makes up the "vehicle position estimating means" of the present invention.

In the second embodiment, the vehicle information acquiring unit 19 is connected to a driving operation detecting unit 21, a GPS receiver 4, a bearing sensor 5, and a distance sensor 6. The signals from the GPS receiver 4, bearing sensor 5, and distance sensor 6 are also received by the approximate position pinpointing unit 7 already described. Thus, the vehicle information acquiring unit 19 can acquire information such as the traveling direction, traveling distance, and steering wheel operation, and the like for the vehicle M.

The driving operation detecting unit 21 also includes sensors and the like for detecting driving operations by the driver, e.g., operation of a turn indicator, steering wheel operation (omitted if duplicating the function of the bearing sensor 5), accelerator operation, brake operation, and the like, and the detected signals are also output to the vehicle information acquiring unit 19.

Subsequently, the vehicle information acquiring unit 19 analyzes the vehicle information acquired for each unit of the vehicle to generate information relating to the route of the vehicle M, and outputs that information to the vehicle position estimating unit 18 and to the previous route storing unit 20. This information relating to the route of the vehicle M, more specifically, includes information such as a route change by the vehicle M, the angle of that route change, and the like.

Vehicle information acquiring unit 19 includes a unit for processing the input data, in the form of hardware, software, or both, and an arithmetic processing unit such as a CPU or the like.

In the second embodiment, the vehicle information acquiring unit 19 serves as the "vehicle information acquiring means" of the present invention.

The previous route storing unit 20 executes a process for associating the information relating to the route of the vehicle M output from the vehicle information acquiring unit 19 with the information for the traveling distance and traveling time of the vehicle M, and stores this information as the previous travel route information. Subsequently, the information relating to the travel routes previously traveled by the vehicle M stored by the previous route storage unit 20 is output to the vehicle position estimating unit 18 responsive to a command signal from the vehicle position estimating unit 18.

The previous route storing unit 20 combine a unit for processing the input data in the form of hardware, software, or both, with an arithmetic processing unit such as a CPU, and with a memory for storing the results of computation.

In the second embodiment, the previous route storing unit 20 serves as the "previous route acquiring means" of the present invention.

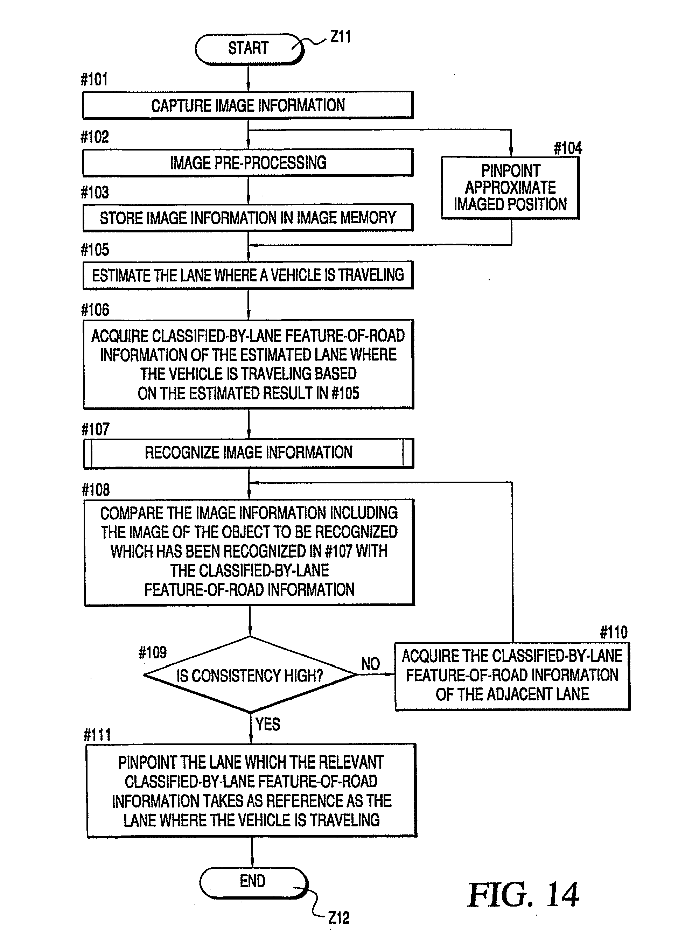

The vehicle position recognition apparatus 1 of this second embodiment also differs from the first embodiment in that the feature-of-road information acquisition unit 9 of the second embodiment includes a lane information acquiring unit 9a and a classified-by-lane feature-of-road acquisition unit 9b, and in that the vehicle position pinpointing unit 17 includes a lane pinpointing unit 17d instead of the position information extracting unit 17a and the imaged position pinpointing unit 17c. The processing performed by each unit will now be described with reference to Fig. 14 which is a flowchart illustrating one example of a routine for pinpointing the lane position of the moving vehicle M using the vehicle position recognition apparatus 1 according to the second embodiment.

In the routine illustrated in Fig. 14, the image information G is first picked up with the imaging device 2 (step S101), and the image information G is subjected to pre-processing using the image pre-processing circuit 13 (step S102). Subsequently, the vehicle position recognizing device 1 stores the pre-processed image information G2, in addition to the image information G1 directly transmitted from the interface circuit 12, in the image memory 14 (step S103). The vehicle position recognition apparatus 1 also executes a process for approximation of the imaged area of the image information G using the position approximation unit 7 in parallel with the execution of steps S102 and S103 (step S104). The execution of these steps S101 through S104 is the same as the execution of steps S01 through S04 in Fig. 4 in the first embodiment, so a detailed description thereof will be omitted here.

Next, the vehicle position estimating unit 18 estimates the lane where the vehicle M is traveling (step S105). The processing for estimating the lane is based on the information from the vehicle information acquiring unit 19 and the previous route storing unit 20. That is to say, the information from the vehicle information acquiring unit 19 outputs the information relating to the route of the vehicle M to the vehicle position estimating unit 18 based on the information from the sensors in the vehicle M. Also, the previous route storing unit 20 correlates the information relating to the route of the vehicle M output from the vehicle information acquiring unit 19 with the information such as the traveling distance, traveling time, and the like of the vehicle M, and stores this correlated information as the information relating to the previous travel routes of the vehicle M. Accordingly, the vehicle position estimating unit 18 can obtain information such as the number of previous route changes of the vehicle M, the history of the angle of each route change, the current route change status, and the like from the vehicle information acquiring unit 19 and the previous route storing unit 20. The vehicle position estimating unit 18 can also determine whether or not a route change or lane change is performed based on detection of a route change angle or operation of turn signals. The vehicle position estimating unit 18 estimates the lane of travel in accordance with an algorithm based on this information.

For example, assume that the lane in which the vehicle M starts moving is estimated to be the left-side lane. Also, if the vehicle M makes n lane changes to the right from that starting lane position, the vehicle position estimating unit 18 can estimate that the vehicle M is in the n'th lane from the left (n being a whole number). Further, if the vehicle M makes m lane changes to the left from that starting lane position, the vehicle position estimating unit 18 can estimate that the vehicle M is in the (n - m)'th lane from the left (m is also a whole number). In the event that (n - m) becomes zero or a negative value, this means that the estimated lane is not the correct (actual) lane, so a correction is made so as to estimate that the lane at that time is the leftmost lane.

The above described algorithm is a mere example, and various other types of algorithms may be employed by the vehicle position estimating unit 18.

Subsequently, the feature-of-road information acquisition unit 9 acquires the classified-by-lane feature-of-road information C' for the lane where the vehicle M was estimated to be traveling in step S105 (step S106). In step S106, first the lane information acquiring unit 9a acquires lane information including the number of lanes of the road 11 around the imaged area approximated in step S104 from the map information database 8. Next the classified-by-lane feature-of-road acquisition unit 9b executes processing to acquire the classified-by-lane feature-of-road information C' for the lane estimated in step S105, based on the acquired lane information. In step S108, a comparison is made between the acquired classified-by-lane feature-of-road information C' and the image information G, determining the sequence for acquiring the classified-by-lane feature-of-road information C' based on the estimation in step S105 also determining the sequence of the classified-by-lane feature-of-road information C' applied for comparison.

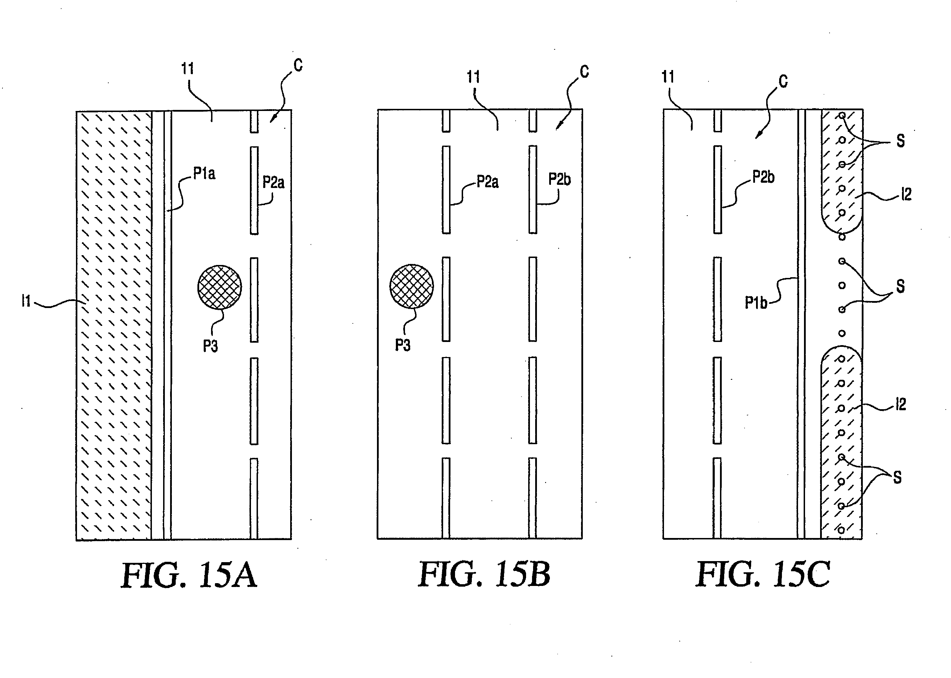

The classified-by-lane feature-of-road information C' is information obtained by extracting the feature-of-road information C relating to the ground objects in the vicinity of the imaged area approximated in step S104 from the wide-range map information stored in the map information database 8. Figs. 15A through 15C schematically illustrate one example of this classified-by-lane feature-of-road information C'. As shown in Figs. 15A through 15C, in the present example, the classified-by-lane feature-of-road information C' includes three types of information for the imaged location approximated in step S104, i.e. information extracted for each of three lanes: left-side lane, center lane, and right-side lane. The information for each lane has a range including information descriptive of the lane itself and information descriptive of the ground objects within the lane and within a predetermined range on both sides thereof. Fig. 15A illustrates classified-by-lane feature-of-road information C'1 for the left-side lane, Fig. 15B illustrates classified-by-lane feature-of-road information C'2 for the center lane, and Fig. 15C illustrates classified-by-lane feature-of-road information C'3 for the right-side lane, respectively. Note that the position of all the ground objects of the road 11 shown in Figs. 15A through 15C are the same as shown in Fig. 8.

Next, the image information recognition unit 10 processes the image information G to recognize objects corresponding to the ground objects included in the image information G (step S107). This step S107 is the same step S06 in Fig. 4 of the first embodiment, so the detailed description thereof is omitted.

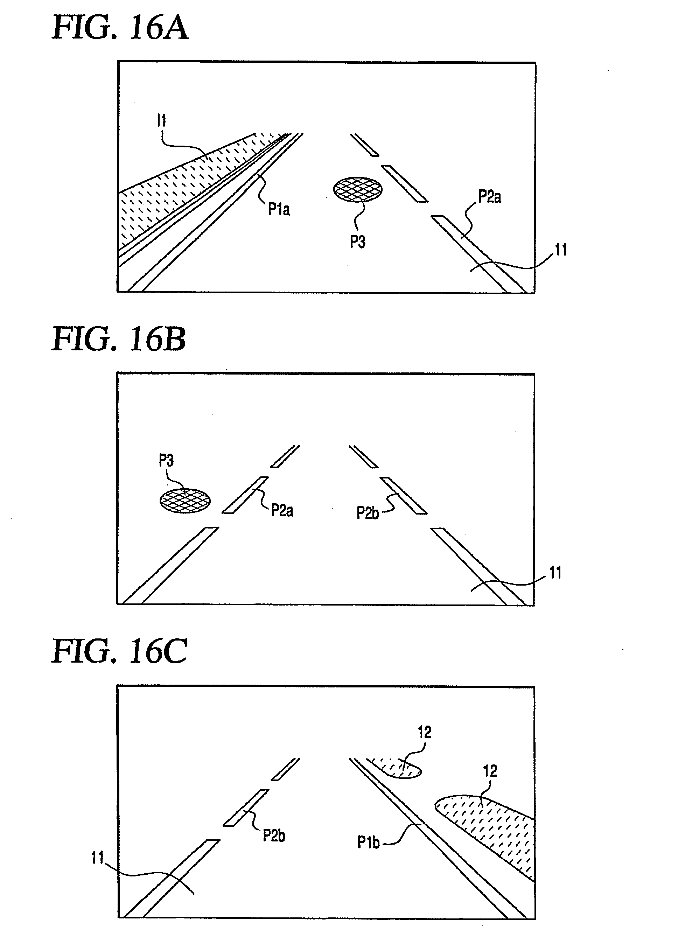

Subsequently, the comparison unit 17b of the vehicle position pinpointing unit 17 compares the image information G including the image of the ground object, which has been recognized in step S107, with the classified-by-lane feature-of-road information C' acquired in step S106 (step S108). In the present embodiment the classified-by-lane feature-of-road information C' is processed to convert it into an information format which can be compared with the image information G, and then a determination is made whether consistency is high or low by comparing the converted classified-by-lane feature-of-road information C' with the image information G. This format conversion processing of the classified-by-lane feature-of-road information C' as shown in Fig. 16, converts the classified-by-lane feature-of-road information C' into data in which the respective ground objects included therein are disposed to correspond to the image information which is assumed to be picked up when the approximate center of the lane is taken as the imaged location. In the example shown, Fig. 16A is the converted data C'1 for the left-side lane shown in Fig. 15A, Fig. 16B is the converted data C'2 for the center lane shown in Fig. 15B, and Fig. 16C is the converted data C'3 for the right-side lane shown in Fig 15C.

Such conversion processing facilitates the comparison between the locations of the images of the ground objects within the image information G and the locations of the respective ground objects corresponding thereto included in the classified-by-lane feature-of-road information C'. Specifically, this processing compares the positions, shapes, colors, and the like of the images of the respective ground objects within the image information G with information for the positions, shapes, colors, and the like of the respective ground objects which are included in the classified-by-lane feature-of-road information C', to determine whether or not consistency between the two is high. For example, if the image information G is such as shown in Fig. 17, the classified-by-lane feature-of-road information C'1 for the left-side lane shown in Fig. 16A matches the image information G regarding the positions, shapes, colors, and the like of the lane lines P1a and P2a on both sides of the lane, manhole cover P3, and sidewalk I1.

Subsequently, if the comparison in step S108 by the comparison unit 17b, indicates a high degree of consistency (agreement) (YES in step S109), the imaged lane pinpointing unit 17d of the vehicle location pinpointing unit 17 identifies the lane for which the classified-by-lane feature-of-road information C' was used as a reference (the lane represented by the matching information C'), as the lane in which the vehicle M is traveling (step S111).

On the other hand, if the comparison in step S108 by this comparison unit 17b, indicates a low degree of consistency (NO in step S109), processing continues by acquiring the classified-by-lane feature-of-road information C' for an adjacent lane from the map information database 8 (step S110). Here, the reasoning for step S110 is that, even if the estimated lane in step S105 is not correct, there is a high probability that the vehicle M is traveling in a lane close thereto. For example, where the first comparison in step S108 takes the center lane of the three lanes as the reference, if the determination in step S109 is a low consistency and both adjoining lanes have low consistency, a determination is made in accordance with a predetermined algorithm such that the right-side lane is first compared, for example.

Subsequently, the comparison unit 17b repeats the processing in steps S108 through S110 until the lane where the vehicle M is traveling is pinpointed by a determination of a high consistency in step S109, or until the comparison processing in step S108 has been made for all of the lanes of the road 11 which the vehicle M is traveling. Though not shown in the flowchart in Fig. 14, if the results of the comparison in step S108 shows a low consistency for all of the lanes of the road 11 which the vehicle M is traveling, a determination is made that the lane position is unknown, and the processing in steps S101 through S111 is executed with the next image information G.

### Other Embodiments

(1) In the second embodiment described above the results of estimation by the vehicle position estimating unit 18 are output to the feature-of-road information acquisition unit 9, and are employed only for determining the sequence of acquisition of the classified-by-lane feature-of-road information C' for the various plural lanes. However, results of estimation by the vehicle position estimating computation unit 18 may also be output to the vehicle position computation unit 17, and employed thereby in the processing for pinpointing the lane position. In this latter modification, for example, in the determination of consistency in step S109 in Fig. 14, if there is a discrepancy with the estimation by the vehicle position estimating unit 18, the discrepancy is added to the determination factors to improve the accuracy in pinpointing the lane.

Similarly, in the first embodiment wherein the vehicle position estimating computation unit 18 or the like is provided, the estimation by the vehicle position estimating unit 18 may be output to the vehicle position pinpointing unit 17 to be employed in the processing to pinpoint the specific position of the vehicle M.

(2) While the above second embodiment has been described as identification of the lane the vehicle M is traveling as pinpointing of the position of the vehicle M, the position of the vehicle widthwise in the of the road (transverse position or location) may be pinpointed in greater detail by acquiring feature-of-road information C for each of plural widthwise positions within each lane.

(3) Also, while the second embodiment has been described as identifying the lane position, i.e. a position widthwise of the road, as the pinpointed position of the vehicle M, the imaged position longitudinally in the road can be pinpointed by using images of ground objects which do not extend along the length of the road 11, such as a manhole cover, stop line, traffic sign, traffic signal, and the like, as reference points, as in the first embodiment.

(4) Both the first and second embodiments have been described as pinpointing the position of the vehicle M by acquiring the feature-of-road information from the map information database 8, and comparing this acquired information with the image information G. However, the present invention is not restricted to employing such feature-of-road information. In another preferred embodiment the vehicle location recognition device 1 would have neither the feature-of-road information acquisition unit 9 nor the map information database 8, and the position of the vehicle M widthwise of the road would be pinpointed based on the results of the image recognition of the ground objects in the image information obtained by the image information recognition unit 10, and the result of the estimation by the vehicle position estimating unit. In this latter case, a determination of the presence of a discrepancy between the image information G and the position estimated by the vehicle position estimating computation unit 18 is substituted for the comparing of the image information G with the feature-of-road information C.
The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A vehicle position recognition apparatus comprising:
image information capturing means (3) for capturing image information (G) for an imaged area, including at least the surface of a road, picked up by an imaging device (2) mounted on the vehicle (M);
feature-of-road information acquiring means (9) for acquiring feature-of-road information (C) relating to at least one ground object within the imaged area from stored map information;
image information recognizing means (10) for image recognition processing of the captured image information, to recognize an image of the at least one ground object included in the captured image information; and
vehicle position pinpointing means (17) for pinpointing the position of the vehicle widthwise of the road, based on the acquired feature-of-road information, and on the position of the recognized at least one ground object within the captured image information.

2. The vehicle position recognition apparatus according to claim 1, wherein said vehicle position pinpointing means pinpoints the transverse position of the vehicle by comparing the position in said image information of the image of the at least one ground object which has been recognized by the image information recognizing means with the position information for the object corresponding to said at least one ground object included in the feature-of-road information.

3. The vehicle position recognition apparatus according to claim 1 or 2, wherein said image information recognizing means extracts image candidates for said at least one ground object from the captured image information, compares the extracted image candidates with the feature-of-road information, and recognizes one image candidate having the highest consistency with the feature-of-road information as the image of said at least one ground object.

4. A vehicle position recognition apparatus comprising:
image information capturing means (3) for capturing image information (G) including at least the surface of a road picked up by an imaging device (2) mounted on a vehicle (M);
feature-of-road information acquiring means (9) for acquiring feature-of-road information (C') relating to at least one ground object, in the vicinity of the area represented by the captured image information, from map information stored as information correlated with each of multiple different positions across the width of the road;
image information recognizing means (10) for image recognition processing of the captured image information, and for recognizing an image corresponding to the at least one ground object included in the captured image information; and
vehicle position pinpointing means (17) for pinpointing the position of the vehicle widthwise of the road on the basis of an item of the acquired feature-of-road information having the highest consistency with the captured image information, from among items of feature-of-road information for each of the multiple different widthwise positions, and taking that position represented by the item of feature-of-road information of highest consistency, as the actual position of the vehicle widthwise of the road.

5. The vehicle position recognition apparatus according to claim 4 further comprising:
vehicle position estimating means for estimating the position of the vehicle widthwise of the road, based on information from one or both of vehicle information acquiring means for acquiring information from the vehicle relating to a route currently traveled by the vehicle, and previous route acquiring means for acquiring information relating to routes previously traveled by the vehicle;
wherein said vehicle position pinpointing means determines the order of comparison of the items of feature-of-road information for the widthwise positions based on the estimation by said vehicle position estimating means.

6. The vehicle position recognition apparatus according to any one of claims 1 to 4 further comprising:
vehicle position estimating means for estimating the position of the vehicle widthwise of the road, based on information from one or both of vehicle information acquiring means for acquiring information from the vehicle relating to a route currently traveled by the vehicle, and previous route acquiring means for acquiring information relating to routes previously traveled by the vehicle;
wherein said vehicle position pinpointing means pinpoints the position of the vehicle widthwise of the road using the estimation of said vehicle position estimating means.

7. The vehicle position recognition apparatus according to any one of claim 1 to 6, wherein the feature-of-road information includes position information of the at least one ground object, and at least one of shape information and color information of the at least one ground object.

8. The vehicle position recognition apparatus according to any one of claim 1 to 7, wherein said vehicle position pinpointing means pinpoints the position of the vehicle along the length of the road based on the feature-of-road information acquired by the feature-of-road information acquiring means, and the position in the image information of the image of said at least one ground object which has been recognized by said image information recognizing means.

9. The vehicle position recognition apparatus according to any one of claim 1 to 8, wherein said feature-of-road information acquiring means acquires, from map information stored in a map information database provided in a navigation device, the feature-of-road information in the neighborhood of a position acquired, when image information is captured by the imaging device, by position information acquiring means provided in the navigation device.

10. A vehicle position recognition apparatus comprising:
image information capturing means (3) for capturing image information (G) including at least the surface of a road picked up by an imaging device (2) mounted on a vehicle (M);
image information recognizing means (10) for image recognition processing of the captured image information, and for recognizing an image of at least one ground object included in the captured image information;
vehicle position estimating means (18) for estimating the position of the vehicle widthwise of the road, based on information from one or both of vehicle information acquiring means (19) for acquiring information from the vehicle relating to a route currently traveled by the vehicle, and previous route acquiring means (20) for acquiring information relating to routes previously traveled by the vehicle; and
vehicle position pinpointing means (17) for pinpointing the position of the vehicle based on the position of the image corresponding to the at least one ground object which has been recognized by said image information recognizing means, and on the estimation by said vehicle position estimating means.

11. A vehicle position recognizing method comprising:
capturing image information including at least the surface of a road, said image information having been picked up by an imaging device mounted on a vehicle;
acquiring feature-of-road information relating to at least one ground object in the vicinity of the area represented by the captured image information from stored map information;
image recognition processing the captured image information to recognize an image corresponding to the at least one ground object included in the captured image information; and
pinpointing the position of the vehicle widthwise of the road, based on the acquired feature-of-road information, and on the position of the image, within the captured image information, which has been recognized in said image recognition processing.

12. A vehicle position recognizing method comprising:
capturing image information including at least the surface of a road, said image information having been picked up by an imaging device mounted on a vehicle;
acquiring items of feature-of-road information relating to at least one ground object, in the vicinity of the area represented by the captured image information, from map information stored as items of information for each of multiple different positions traversing the width of the road;
image recognition processing the captured image information to recognize an image of an object corresponding to the at least one ground object; and
pinpointing the position of the vehicle widthwise of the road on the basis of identification of one item of feature-of-road information having the highest consistency, among the acquired items of feature-of-road information, with the position in the captured image information of the image which has been recognized in said image information recognition processing, and taking the position corresponding to the identified item of feature-of-the-road information as the position of the vehicle widthwise of the road.

13. A vehicle position recognizing method comprising:
capturing image information including at least the surface of a road, said image information having been picked up by an imaging device mounted on a vehicle;
image recognition processing the captured image information to recognize the image of at least one ground object included in the captured image information;
estimating the position of the vehicle widthwise of the road based on information from one or both of information acquired from the vehicle relating to a route currently traveled by the vehicle, and information relating to routes previously traveled by the vehicle; and
pinpointing the position of the vehicle widthwise of the road, based on the position in the captured image information of the image of the at least one ground object which has been recognized in the image recognition processing, and on the estimated position.
